(19) Europäisches Patentamt / European Patent Office / Office européen des brevets

(11) **EP 2 247 946 B1**

(12) **EUROPÄISCHE PATENTSCHRIFT**

(45) Veröffentlichungstag und Bekanntmachung des Hinweises auf die Patenterteilung:
**18.09.2013   Patentblatt 2013/38**

(21) Anmeldenummer: **09715646.7**

(22) Anmeldetag: **25.02.2009**

(51) Int Cl.:
*G01N 23/04* *(2006.01)*

(86) Internationale Anmeldenummer:
**PCT/EP2009/001325**

(87) Internationale Veröffentlichungsnummer:
**WO 2009/106304 (03.09.2009 Gazette 2009/36)**

(54) **RÖNTGENCOMPUTERTOMOGRAPH UND VERFAHREN ZUR UNTERSUCHUNG EINES OBJEKTES MITTELS RÖNTGENCOMPUTERTOMOGRAPHIE**

X-RAY COMPUTER TOMOGRAPH AND METHOD FOR ANALYZING AN OBJECT BY MEANS OF X-RAY COMPUTER TOMOGRAPHY

TOMODENSITOMÈTRE À RAYONS X ET PROCÉDÉ D'ANALYSE D'UN OBJET PAR TOMODENSITOMÉTRIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.02.2008   DE 102008011391**

(43) Veröffentlichungstag der Anmeldung:
**10.11.2010   Patentblatt 2010/45**

(73) Patentinhaber: **Fraunhofer-Gesellschaft zur Förderung der angewandten Forschung e.V.
80686 München (DE)**

(72) Erfinder:
• FUCHS, Theobald
  **90429 Nürnberg (DE)**
• UHLMANN, Norman
  **91056 Erlangen (DE)**

(74) Vertreter: **Rau, Schneck & Hübner
Patentanwälte - Rechtsanwälte
Königstraße 2
90402 Nürnberg (DE)**

(56) Entgegenhaltungen:
EP-A- 1 553 407          US-A- 6 134 297
US-A1- 2003 210 761      US-A1- 2004 091 079
US-B1- 6 256 367          US-B1- 6 687 326
US-B2- 6 925 140

**Beschreibung**

Die Erfindung betrifft einen Röntgencomputertomographen zur Untersuchung eines Objektes mittels Röntgencomputertomographie gemäß dem Oberbegriff des Anspruchs 1. Ferner betrifft die Erfindung ein Verfahren zur Untersuchung eines Objektes mittels Röntgencomputertomographie gemäß dem Oberbegriff des Anspruches 10.

Die Röntgencomputertomographie (CT) ermöglicht die zerstörungsfreie und berührungslose Untersuchung der inneren Struktur eines Objektes. Sie wird sowohl im medizinischen Bereich zur Untersuchung des menschlichen Körpers als auch im industriellen Bereich zur Qualitätsprüfung eingesetzt. Ein wesentlicher Schritt bei der Röntgencomputertomographie ist die Normierung der Intensität der Röntgenstrahlung, die hinter dem zu untersuchenden Objekt mittels eines Röntgendetektors gemessen wird. Dies erfolgt üblicherweise derart, dass ein Grauwert im Detektor bestimmt wird, der als Referenzwert für die ungeschwächte primäre Röntgenstrahlung interpretiert wird. Mit diesem Referenzwert werden die aus der vom Objekt geschwächten Röntgenstrahlung resultierenden Grauwerte normiert.

Bei der Verwendung von integrierenden, nicht-energieauflösenden Röntgendetektoren, wie dies bei der zerstörungsfreien Prüfung von Objekten im industriellen Bereich üblich ist, existiert keine Möglichkeit zu entscheiden, ob die auf den Röntgendetektor auftreffenden Photonen der primären Röntgenstrahlung oder der sekundären Röntgenstrahlung zuzurechnen sind. Die Photonen der primären Röntgenstrahlung sind ohne im zu untersuchenden Objekt mit diesem wechselzuwirken von der Röntgenquelle zu dem Röntgendetektor gelangt, wohingegen die Photonen der sekundären Röntgenstrahlung bei einem Streuprozess in dem Objekt entstanden sind. Die Messung der durch das Objekt geschwächten Intensität mittels des Röntgendetektors enthält somit auch - neben der im Objekt induzierten Fluoreszenzstrahlung - einen Beitrag der zufällig gestreuten Photonen, also einen Beitrag der sekundären Röntgenstrahlung. Die sekundäre Röntgenstrahlung wird auch als Streustrahlung bezeichnet. Die Streustrahlung verfälscht die Messung der geschwächten primären Röntgenstrahlung, wodurch die Bildqualität von rekonstruierten Bildern des Objektes beeinträchtigt wird.

Aus der US 6 687 326 B1 ist ein Röntgencomputertomograph bekannt, der eine Röntgenquelle und einen Röntgendetektor sowie einen dazwischen angeordneten Objektträger aufweist. Der Röntgendetektor umfasst einen flächigen Primärdetektor und einen zeilenförmigen Streustrahlungsdetektor, die übereinander angeordnet sind. Der Streustrahlungsdetektor ist mit einer Auswerteeinheit verbunden, die mittels der gemessenen Streustrahlung das aufgenommene Röntgenbild korrigiert. Nachteilig ist, dass die erzielbare Bildqualität nicht zufriedenstellend ist.

Der Erfindung liegt daher die Aufgabe zugrunde, einen Röntgencomputertomographen zu schaffen, der die Aufnahme von Bildern eines zu untersuchenden Objektes mit einer hohen Bildqualität ermöglicht.

Diese Aufgabe wird erfindungsgemäß durch einen Röntgencomputertomographen mit den Merkmalen des Anspruches 1 gelöst. Erfindungsgemäß wurde erkannt, dass mit zwei Intensitätsmessungen ein Streustrahlungskorrekturfaktor berechenbar ist, mittels dem der Einfluss der Streustrahlung korrigiert werden kann. Mit der ersten Intensitätsmesseinrichtung, die zwischen der Röntgenquelle und dem mit dem zu untersuchenden Objekt bestückten Objektträger angeordnet ist, ist eine Intensität der ungeschwächten primären Röntgenstrahlung messbar. Mit der zweiten Intensitätsmesseinrichtung, die zwischen dem Objektträger und dem Röntgendetektor außerhalb des Projektionsbereiches des zu untersuchenden Objektes angeordnet ist, ist eine Intensität messbar, die sich im Wesentlichen aus der Intensität der ungeschwächten primären Röntgenstrahlung und der Streustrahlungsintensität, also der Intensität der sekundären Röntgenstrahlung, zusammensetzt. Aus den gemessenen Intensitäten kann der Streustrahlungskorrekturfaktor berechnet werden, der die vom Objekt erzeugte Streustrahlung charakterisiert. Bei dem Streustrahlungskorrekturfaktor handelt es sich um einen Korrekturwert, der als Faktor im streng mathematischen Sinn oder in anderer mathematischer Form in eine Streustrahlungskorrektur einfließen kann. Mit diesem Streustrahlungskorrekturfaktor kann durch Annahme einer Streustrahlungsverteilung nullter oder höherer Ordnung eine Korrektur der von dem Röntgendetektor gemessenen Intensitäten für jedes einzelne Pixel durchgeführt werden. Der Einfluss der Streustrahlung kann somit weitestgehend eliminiert werden, was zu einer Verbesserung der Bildqualität des Röntgencomputertomographen führt. Darüber hinaus liefert die Messung der Intensität der ungeschwächten primären Röntgenstrahlung eine zuverlässige Normierungsgröße für die Normierung der von dem Röntgendetektor gemessenen Intensitäten. Hierdurch wird ebenfalls die Bildqualität verbessert.

Eine Weiterbildung nach Anspruch 2 verbessert die Genauigkeit der Messung der Intensität der ungeschwächten primären Röntgenstrahlung. Je näher die erste Intensitätsmesseinrichtung an der Röntgenquelle angeordnet ist, desto höher ist die Messgenauigkeit.

Durch ein Anordnen der ersten Intensitätsmesseinrichtung nach Anspruch 3 wird verhindert, dass diese in einer Projektion des zu untersuchenden Objektes sichtbar ist.

Durch eine Weiterbildung nach Anspruch 4 wird die Genauigkeit der Messung der zweiten Intensität verbessert. Je näher die zweite Intensitätsmesseinrichtung an dem Röntgendetektor angeordnet ist, desto genauer kann der Einfluss der Streustrahlung gemessen und berechnet werden.

Eine Ausbildung der Intensitätsmesseinrichtungen nach Anspruch 5 ist kostengünstig.

Eine Weiterbildung nach Anspruch 6 vereinfacht die Berechnung des mindestens einen Streustrahlungskorrekturfaktors. Die Signale der Intensitätsmesseinrichtungen können aufgrund der baugleichen Ausbildung unmittelbar weiter verarbeitet werden, ohne dass eine Normierung der Signale auf eine einheitliche Bezugsgröße durchgeführt werden muss. Baugleiche Intensitätsmesseinrichtungen müssen dementsprechend nicht kalibriert werden.

Durch eine Weiterbildung nach Anspruch 7 ist eine hohe Bildqualität erzielbar.

Eine Weiterbildung nach Anspruch 8 ermöglicht eine genaue Messung der Intensität der ungeschwächten primären Röntgenstrahlung mittels der ersten Intensitätsmesseinrichtung und der sich aus der Intensität der ungeschwächten primären Röntgenstrahlung und der Intensität der sekundären Röntgenstrahlung zusammensetzenden Intensität mittels der zweiten Intensitätsmesseinrichtung.

Eine Weiterbildung nach Anspruch 9 ermöglicht die Berechnung von korrigierten Schwächungswerten für jedes Pixel des Röntgendetektors, mittels denen in der Auswerteeinheit mit Hilfe von bekannten Rekonstruktionsalgorithmen ein Röntgenbild erzeugt werden kann. Bei einer Streustrahlungskorrektur nullter Ordnung ergibt sich der Streustrahlungskorrekturfaktor als Quotient der zweiten Intensität und der ersten Intensität. Bei einer Streustrahlungskorrektur höherer Ordnung ergibt sich der Streustrahlungskorrekturfaktor als Produkt dieses Quotienten und der zugehörigen Monte-Carlo-Streustrahlungsverteilung.

Der Erfindung liegt ferner die Aufgabe zugrunde, ein Verfahren zur Untersuchung eines Objektes mittels Röntgencomputertomographie zu schaffen, das eine hohe Bildqualität ermöglicht.

Diese Aufgabe wird erfindungsgemäß durch ein Verfahren mit den Merkmalen des Anspruchs 10 gelöst. Die Vorteile des erfindungsgemäßen Verfahrens entsprechen den bereits beschriebenen Vorteilen des erfindungsgemäßen Röntgencomputertomographen.

Eine Weiterbildung nach Anspruch 11 gewährleistet eine zeitliche Zuordnung der Messwerte und somit eine zuverlässige sowie genaue Korrektur der Streustrahlung.

Eine Messung nach Anspruch 12 verhindert, dass die erste Intensitätsmesseinrichtung in Projektionen des zu untersuchenden Objektes sichtbar ist.

Ein Berechnen des mindestens einen Streustrahlungskorrekturfaktors nach Anspruch 13 ermöglicht eine verbesserte Bildqualität, da die räumliche Verteilung der Streustrahlung berücksichtigt wird.

Eine Weiterbildung nach Anspruch 14 ermöglicht eine verbesserte Bildqualität, da die Abhängigkeit der Streustrahlung von der jeweiligen Projektionsrichtung berücksichtigt wird. Aufgrund der Geometrie des zu untersuchenden Objektes ergeben sich für unterschiedliche Projektionsrichtungen auch unterschiedliche Streustrahlungskorrekturfaktoren.

Eine Weiterbildung nach Anspruch 15 ermöglicht eine hohe Bildqualität.

Weitere Merkmale und Vorteile der Erfindung ergeben sich aus der Beschreibung eines Ausführungsbeispieles anhand der Zeichnung. Es zeigen:

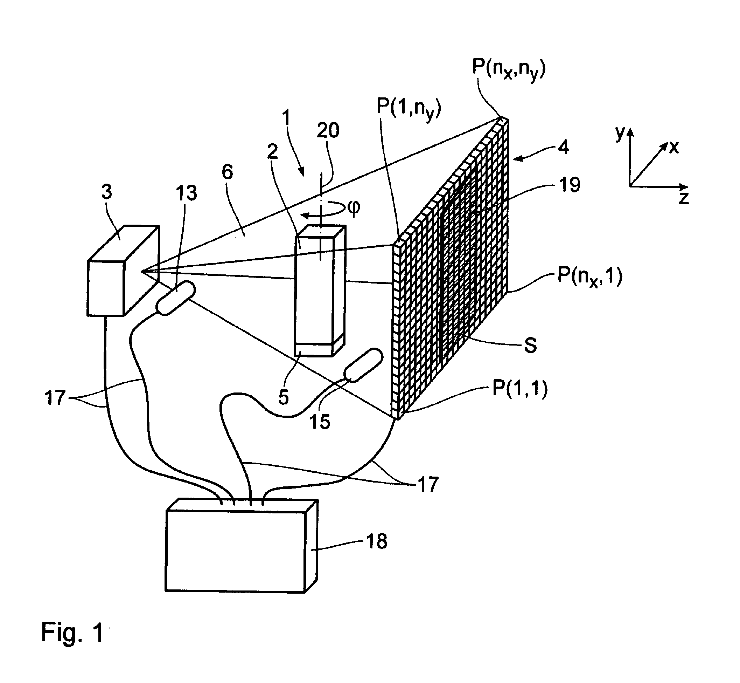

Fig. 1    eine perspektivische Schemadarstellung eines Röntgencomputertomographen,

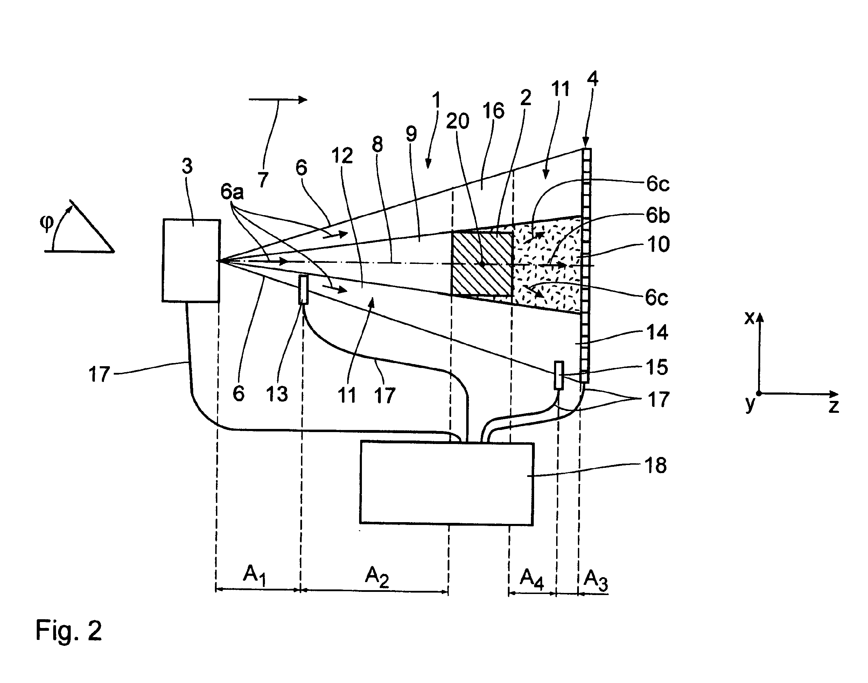

Fig. 2    eine Draufsicht auf den Röntgencomputertomographen in Fig. 1,

Fig. 3    eine schematische Darstellung einer Streustrahlungsreduktion nullter Ordnung, und

Fig. 4    eine schematische Darstellung einer Streustrahlungsreduktion höherer Ordnung mittels einer Monte-Carlo-Verteilung.

Ein Röntgencomputertomograph 1 weist zur Untersuchung eines Objektes 2 eine Röntgenquelle 3 und einen zugehörigen Röntgendetektor 4 auf. Zwischen der Röntgenquelle 3 und dem Röntgendetektor 4 ist ein Objektträger 5 angeordnet, auf dem das Objekt 2 positionierbar ist.

Die Röntgenquelle 3 dient zum Erzeugen von einer kegelförmig austretenden Röntgenstrahlung 6 in einer Strahlrichtung 7. Die Strahlrichtung 7 verläuft im Wesentlichen parallel zu einer Mittellängsachse 8 des Röntgencomputertomographen 1. Die Röntgenquelle 3 ist beispielsweise als Röntgenröhre ausgebildet, deren Aufbau bekannt ist.

Der Röntgendetektor 4 erstreckt sich im Wesentlichen in einer x-y-Ebene, die durch eine x-Richtung und eine senkrecht dazu verlaufende y-Richtung definiert ist. Die Mittellängsachse 8 definiert eine z-Richtung, die im Wesentlichen senkrecht zu der x-y-Ebene verläuft. Der Röntgendetektor 4 weist in x- und y-Richtung eine Vielzahl von Pixeln auf, die im Einzelnen mit $P(x,y)$ bezeichnet werden, wobei für $x = 1$ bis $n_x$ und für $y = 1$ bis $n_y$ gilt. Der Röntgendetektor 4 ist beispielsweise als integrierender, nichtenergieauflösender Flachbilddetektor ausgebildet, dessen Aufbau bekannt ist.

In Abhängigkeit der Geometrie des zu untersuchenden Objektes 2 ist die kegelförmig austretende Röntgenstrahlung 6 in unterschiedliche Bereiche unterteilbar. In einem Bestrahlungsbereich 9, der zwischen der Röntgenquelle 3 und dem Objekt 2 liegt, trifft primäre Röntgenstrahlung 6a ungeschwächt auf das Objekt 2. In einem Projektionsbereich 10, der zwischen dem Objekt 2 und dem Röntgendetektor 4 liegt, trifft von dem Objekt 2 geschwächte primäre Röntgenstrahlung 6b zusammen mit sekundärer Röntgenstrahlung 6c, also mit Streustrahlung, auf den Röntgendetektor 4.

Der Projektionsbereich 10 wird auch als Schattenwurfbereich bezeichnet. Der Bestrahlungsbereich 9 und der Projektionsbereich 10 sind von einem Messbereich 11 umgeben, in dem die ungeschwächte primäre Röntgenstrahlung 6a, ohne auf das Objekt 2 zu treffen, von der Röntgenquelle 3 zu dem Röntgendetektor 4 gelangt.

In einem ersten Messteilbereich 12, der zwischen der Röntgenquelle 3 und dem Objekt 2 außerhalb des Bestrahlungsbereiches 9 liegt, ist eine erste Intensitätsmesseinrichtung 13 angeordnet. Mittels der ersten Intensitätsmesseinrichtung 13 ist eine erste Intensität $I_0$ der ungeschwächten primären Röntgenstrahlung 6a messbar. Die erste Intensitätsmesseinrichtung 13 weist zu der Röntgenquelle 3 einen ersten Abstand $A_1$ und zu dem Objektträger 5 einen zweiten Abstand $A_2$ auf. Die Abstände $A_1$, $A_2$ sind jeweils als kürzeste Axial-Entfernungen der ersten Intensitätsmesseinrichtung 13 zu der Röntgenquelle 3 bzw. zu dem Objektträger 5 in z-Richtung definiert. Das Verhältnis des ersten Abstandes $A_1$ zur dem zweiten Abstand $A_2$ ist kleiner als 1/2, insbesondere kleiner als 1/4, und insbesondere kleiner als 1/8.

In einem zweiten Messteilbereich 14, der zwischen dem Objekt 2 und dem Röntgendetektor 4 außerhalb des Projektionsbereiches 10 liegt, ist eine zweite Intensitätsmesseinrichtung 15 angeordnet. Mittels der zweiten Intensitätsmesseinrichtung 15 ist eine zweite Intensität $I_1$ der durch das Objekt 2 ungeschwächten primären Röntgenstrahlung 6a und der sekundären Röntgenstrahlung 6c, also der Streustrahlung, messbar. Die zweite Intensitätsmesseinrichtung 15 weist von dem Röntgendetektor 4 einen dritten Abstand $A_3$ und von dem Objektträger 5 einen vierten Abstand $A_4$ auf. Die Abstände $A_3$, $A_4$ sind jeweils als kürzeste Axial-Entfernungen zu dem Röntgendetektor 4 bzw. zu dem Objektträger 5 in z-Richtung definiert. Ein Verhältnis des dritten Abstandes $A_3$ zu dem vierten Abstand $A_4$ ist kleiner als 1/2, insbesondere kleiner als 1/4, und insbesondere kleiner als 1/8. Ein dritter Messteilbereich 16, der zwischen dem ersten Messteilbereich 12 und dem zweiten Messteilbereich 14 liegt, stellt einen Übergangsbereich dar.

Die Intensitätsmesseinrichtungen 13, 15 sind baugleich als elektronische Dosimeter ausgebildet und liefern als Messwerte Dosisleistungen, die zu den Intensitäten $I_0$, $I_1$ proportional sind.

Die Röntgenquelle 3, der Röntgendetektor 4 und die Intensitätsmesseinrichtungen 13, 15 sind über Signalleitungen 17 mit einer Auswerteeinheit 18 verbunden. Die Auswerteeinheit 18 ist derart ausgebildet, dass mindestens ein Streustrahlungskorrekturfaktor F in Abhängigkeit der gemessenen Intensitäten $I_0$, $I_1$ berechenbar ist.

Bei Bestrahlen des Objektes 2 entsteht auf dem Röntgendetektor 4 eine Projektion S des Objektes 2. In der Projektion S treten innere Strukturen 19 des Objektes 2 hervor, sodass eine zerstörungsfreie Untersuchung des Objektes 2 möglich ist. Zur Erzeugung von unterschiedlichen Projektionen S ist der Objektträger 5 um eine parallel zu der x-y-Ebene verlaufende Drehachse 20 verdrehbar. Die Verdrehstellung des Objektträgers 5 und somit des Objektes 2 wird durch einen Verdrehwinkel $\varphi$ gekennzeichnet. Die unterschiedlichen Projektionen werden mit S ($\varphi_n$) bezeichnet, wobei für n=1 bis N gilt. Der Verdrehwinkel $\varphi$ ist somit ein Maß für die Projektionsrichtung.

Nachfolgend wird ein erstes erfindungsgemäßes Verfahren zur Untersuchung des Objektes 2 mittels Röntgencomputertomographie beschrieben.

Das Objekt 2 wird auf dem Objektträger 5 angeordnet und mit einem ersten Verdrehwinkel $\varphi_1$ relativ zu der Röntgenquelle 3 positioniert. Mittels der Röntgenquelle 3 wird das Objekt 2 mit Röntgenstrahlung 6a bestrahlt. Der Röntgendetektor 4 detektiert die auf ihn treffende Röntgenstrahlung 6. Für jedes Pixel P(x,y) wird die detektierte Röntgenstrahlung 6 in einen entsprechenden Grauwert g(x,y) gewandelt und zur Auswertung an die Auswerteeinheit 18 übertragen.

Zeitgleich werden mit der ersten Intensitätsmesseinrichtung Messwerte 13 der ersten Intensität $I_0$ und mit der zweiten Intensitätsmesseinrichtung 15 Messwerte der zweiten Intensität $I_1$ gemessen und an die Auswerteeinheit 18 zur Auswertung übertragen.

Das erste erfindungsgemäße Verfahren geht von der Annahme aus, dass die als Streustrahlung bezeichnete sekundäre Röntgenstrahlung 6c in zufällige Richtungen gestreut wird und als konstanter sowie homogener Hintergrund auf dem Röntgendetektor 4 erscheint. Unter dieser Annahme gilt für jedes Pixel P(x,y) folgende Gleichung:

$$g(x,y) = k \cdot [I(x, y) + I_S] = k \cdot [I_0 \cdot e^{-A(x,y)} + I_S] \qquad (1)$$

Gleichung (1) stellt einen Zusammenhang zwischen der Intensität I(x,y) der geschwächten primären Röntgenstrahlung 6b, der Intensität $I_0$ der ungeschwächten primären Röntgenstrahlung 6a, der Intensität $I_s$ der Streustrahlung 6c und dem mittels des Röntgendetektors 4 gemessenen Grauwertes g(x,y) für jedes Pixel P(x,y) her. k ist ein Skalierungsfaktor zwischen der physikalischen Intensität der Röntgenstrahlung 6 und den digitalen Grauwerten g(x,y). Der Skalierungsfaktor k ist konstant und eine Eigenschaft des Röntgendetektors 4. A(x,y) ist ein Schwächungswert für jedes Pixel P(x,y), der die Schwächung der Intensität $I_0$ der ungeschwächten primären Röntgenstrahlung 6a entlang des Weges von der Röntgenquelle 3 durch das Objekt 2 zu dem jeweiligen Pixel P(x,y) auf dem Röntgendetektor 4 beschreibt.

Der Schwächungswert A(x,y) wird für jedes Pixel P(x,y) bei der Rekonstruktion eines Röntgenbildes mittels der Auswerteeinheit 18 benötigt.

Mittels der dosimetrischen Messungen der Intensitäten $I_0$, $I_1$ kann ohne eine Konvertierung der Messwerte ein unabhängiger, einheitenloser Überhöhungsfaktor f definiert und bestimmt werden. Der Überhöhungsfaktor f ist definiert als:

$$f = \frac{I_1}{I_0} \qquad (2)$$

Der Überhöhungsfaktor f wird aus der Messung der Intensitäten $I_0$, $I_1$ bestimmt. Da sich die Intensität $I_1$ im Wesentlichen aus der Intensität $I_0$ der ungeschwächten primären Röntgenstrahlung 6a und der Intensität $I_s$ der Streustrahlung 6c zusammensetzt, ergibt sich folgende Gleichung:

$$f = \frac{I_1}{I_0} \approx \frac{I_0 + I_s}{I_0} = 1 + \frac{I_s}{I_0} \qquad (3)$$

Aus der Gleichung (3) folgt für die Intensität $I_s$ der Streustrahlung 6c:

$$I_S = I_0 (f\text{-}1) \qquad (4)$$

Wird Gleichung (4) in Gleichung (1) eingesetzt, so kann die Intensität $I_s$ der Streustrahlung 6c eliminiert werden:

$$g(x,y) = k \cdot I_0 \cdot [e^{-A(x,y)} + f - 1] \qquad (5)$$

Der Überhöhungsfaktor f und der Schwächungswert A(x,y) sind jeweils einheitenlose Faktoren mit $f \geq 1$ und A (x, y) > 0. Der Überhöhungsfaktor f beschreibt den Anteil der Streustrahlung 6c, die den Röntgendetektor 4 erreicht. Der Überhöhungsfaktor f nimmt zu, wenn der Abstand zwischen dem Objekt 2 und dem Röntgendetektor 4 abnimmt.

In Gleichung (5) kann das Produkt aus dem Skalierungsfaktor k und der Intensität $I_0$ durch einen Vorversuch ohne das Objekt 2 bestimmt werden. Bei dem Vorversuch ohne das Objekt 2 ist der Überhöhungsfaktor f=1 und der Schwächungswert A(x,y)=0 für alle Pixel P(x,y). Gleichung (5) vereinfacht sich in diesem Fall zu:

$$g(x,y) = k \cdot I_0 = \text{const.} \qquad (6)$$

Die bei dem Vorversuch gemessenen Grauwerte g(x,y) stellen somit das Produkt aus dem Skalierungsfaktor k und der Intensität $I_0$ dar.

Durch Auflösen von Gleichung (5) ergibt sich der Schwächungswert A(x,y) für jedes Pixel P(x,y) wie folgt:

$$A(x,y) = - \ln \left[ \frac{g(x,y)}{k \cdot I_0} + 1 - f \right] \qquad (7)$$

Gleichung (7) liefert für jedes Pixel P(x,y) einen korrigierten Schwächungswert A(x,y), in dem der Einfluss der Streustrahlung 6c weitestgehend eliminiert ist. Mittels der Schwächungswerte A(x,y) kann in der Auswerteeinheit 18 mittels bekannter Rekonstruktionsalgorithmen ein Röntgenbild erzeugt werden.

Unter der getroffenen Annahme, dass die Streustrahlung 6c als konstanter und homogener Hintergrund auf dem Röntgendetektor 4 erscheint, stellt der Überhöhungsfaktor f gleichzeitig den Streustrahlungskorrekturfaktor F dar. Es gilt somit:

$$F = f \qquad\qquad (8)$$

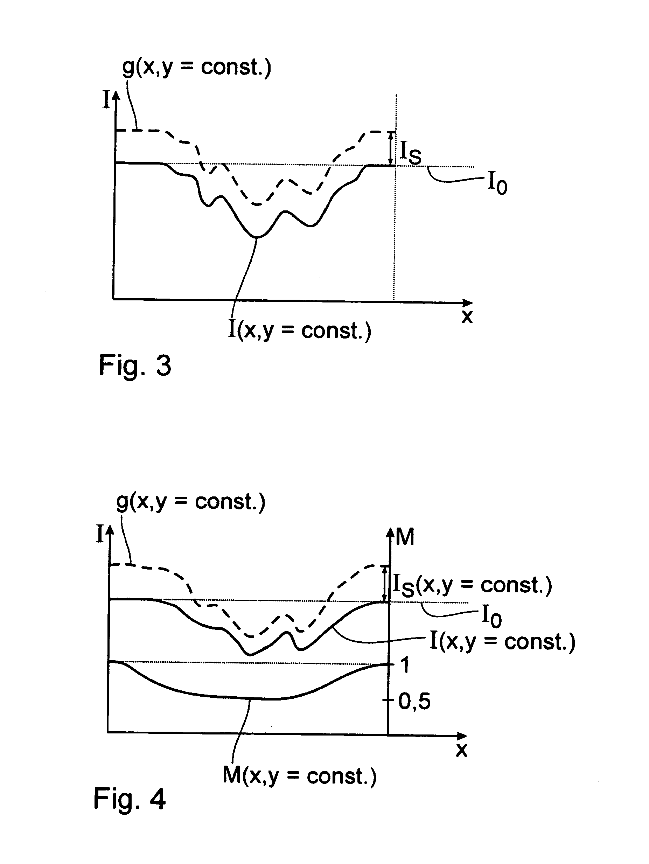

Mittels Gleichung (7) wird somit eine Streustrahlungsreduktion nullter Ordnung durchgeführt. Fig. 3 veranschaulicht die Streustrahlungsreduktion nullter Ordnung am Beispiel der in der x- Richtung bei einer konstanten Position in y- Richtung gemessenen Grauwerte g (x, y=const.) .

Die gestrichelte Linie in Fig. 3 stellt das gemessene Profil der Grauwerte g (x, y=const.) dar. Die durchgezogene Linie ist das Profil der Intensität I (x, y=const.) der geschwächten primären Röntgenstrahlung 6b nach dem Objekt 2. Die Intensität $I_s$ der Streustrahlung 6c stellt einen konstanten Offset zwischen beiden Linien dar.

Das beschriebene Verfahren wird für N unterschiedliche Verdrehwinkel $\varphi_n$ wiederholt, sodass unterschiedliche Projektionen $S(\varphi_n)$ mit n=1 bis N erzeugt werden. Für jede Projektion $S(\varphi_n)$ wird ein Streustrahlungskorrekturfaktor $F_n=f_n$ und korrigierte Schwächungswerte $A_n(x,y)$ berechnet. Mittels der Auswerteeinheit 18 kann aus den korrigierten Schwächungswerten $A_n(x,y)$ ein dreidimensionales Bild des Objektes 2 berechnet werden.

Bei einem zweiten erfindungsgemäßen Verfahren wird eine Streustrahlungsreduktion höherer Ordnung durchgeführt. Es wird angenommen, dass die Streustrahlungsverteilung nicht homogen ist, sondern abhängig von der Geometrie des zu untersuchenden Objektes 2 örtlich ungleichmäßig verteilt ist. Durch sogenannte Monte- Carlo- Rechnungen kann in Abhängigkeit der Geometrie des zu untersuchenden Objektes 2 eine relative Streustrahlungsverteilung höherer Ordnung ermittelt werden. Eine derartige relative Streustrahlungsverteilung wird als Monte- Carlo- Streustrahlungsverteilung bezeichnet. Bei der Annahme einer Streustrahlungsverteilung höherer Ordnung ergibt sich der Streustrahlungskorrekturfaktor F (x, y) für jeden Pixel P (x, y) zu:

$$F_n(x,y) = f_n \cdot M_n(x,y) \qquad\qquad (9)$$

$M_n$ (x, y) ist ein einheitenloser Faktor zwischen 0 und 1 und beschreibt die relative Streustrahlungsverteilung für eine Projektion S $(\varphi_n)$ mit n=1 bis N in den Pixeln P (x, y) . Fig. 4 veranschaulicht eine Streustrahlungsreduktion höherer Ordnung mittels einer Monte- Carlo- Verteilung M (x, y=const.) . Die Intensität $I_s$ (x, y=const.) der Streustrahlung 6c ist entsprechend der Monte- Carlo- Verteilung M (x, y=const.) in der x- Richtung ungleichmäßig verteilt.

Der erfindungsgemäße Röntgencomputertomograph und die erfindungsgemäßen Verfahren zur Untersuchung eines Objektes mittels Röntgencomputertomographie verbessern die Bildqualität, beispielsweise bei der zerstörungsfreien Materialprüfung, indem eine unabhängige dosimetrische Abschätzung des Streustrahlhintergrundes durchgeführt wird. Bei dieser Abschätzung kann sowohl von einer Streustrahlungsverteilung nullter Ordnung als auch von einer Streustrahlungsverteilung höherer Ordnung ausgegangen werden.

In Abhängigkeit der gemessenen ersten Intensität der ungeschwächten primären Röntgenstrahlung 6a und der sich aus der Intensität der ungeschwächten primären Röntgenstrahlung 6a und der Intensität der sekundären Röntgenstrahlung 6c zusammensetzenden zweiten Intensität wird ein Streustrahlungskorrekturfaktor F berechnet, anhand dem für jedes Pixel P(x,y) korrigierte Schwächungswerte A(x,y) berechnet werden können, in denen der Einfluss der Streustrahlung 6c weitestgehend eliminiert ist. Die korrigierten Schwächungswerte A(x,y) werden für jede einzelne Projektion S entsprechend den Gleichungen (7), (8) und (9) nach folgender Gleichung berechnet:

$$A(x,y) = -\ln\left[\,\frac{g(x,y)}{k \cdot I_0} + 1 - F\,\right] \qquad\qquad (10)$$

Wird von einer Streustrahlungsverteilung nullter Ordnung ausgegangen, so entspricht der Streustrahlungskorrekturfaktor F in Gleichung (10) dem gemessenen Überhöhungsfaktor f, der sich aus dem Quotienten der zweiten Intensität $I_1$ und der ersten Intensität $I_0$ ergibt:

$$F = f = \frac{I_1}{I_0} \qquad\qquad (11)$$

Auf Grund der getroffenen Annahme, dass die Streustrahlung 6c als konstanter und homogener Hintergrund auf dem Röntgendetektor 4 erscheint, ist der Streustrahlungskorrekturfaktor F für alle Pixel P(x,y) konstant.

Wird von einer Streustrahlungsverteilung höherer Ordnung ausgegangen, so ergibt sich der Streustrahlungskorrekturfaktor F(x,y) in Gleichung (10) als Produkt aus dem gemessenen Überhöhungsfaktor f und der angenommenen Monte-Carlo-Streustrahlungsverteilung M(x,y):

$$F(x,y) = f \cdot M(x,y) = \frac{I_1}{I_0} \cdot M(x,y) \qquad\qquad (12)$$

Der Streustrahlungskorrekturfaktor F(x,y) ist auf Grund der getroffenen Annahme nicht konstant und entsprechend der Monte-Carlo-Streustrahlungsverteilung M(x,y) ungleichmäßig über die Pixel P(x,y) verteilt.

Mittels der korrigierten Schwächungswerte A(x,y) kann anhand von bekannten Rekonstruktionsalgorithmen ein Röntgenbild mit verbesserter Bildqualität erzeugt werden.

Bei dem Streustrahlungskorrekturfaktor F bzw. dem Überhöhungsfaktor f handelt es sich um Werte, die in die Streustrahlungskorrektur einfließen, wobei diese Werte in einem streng mathematischen Sinn keine Faktoren sein müssen.

**Patentansprüche**

1. Röntgencomputertomograph zur Untersuchung eines Objektes mittels Röntgencomputertomographie mit

   - einer Röntgenquelle (3) zum Erzeugen von Röntgenstrahlung (6),
   - einem Röntgendetektor (4) zum Detektieren der Röntgenstrahlung (6),
   - einem Objektträger (5) zum Positionieren eines zu untersuchenden Objektes (2) zwischen der Röntgenquelle (3) und dem Röntgendetektor (4), und
   - einer Auswerteeinheit (18) zum Auswerten der detektierten Röntgenstrahlung (6),

   **dadurch gekennzeichnet, dass**

   - eine erste Intensitätsmesseinrichtung (13) zur Messung einer ersten Intensität ($I_0$) der Röntgenstrahlung (6) zwischen der Röntgenquelle (3) und dem Objektträger (5) angeordnet ist,
   - eine zweite Intensitätsmesseinrichtung (15) zur Messung einer zweiten Intensität ($I_1$) der Röntgenstrahlung (6) zwischen dem Objektträger (5) und dem Röntgendetektor (4) außerhalb eines Projektionsbereiches (10) des Objektes (2) angeordnet ist,
   - die Intensitätsmesseinrichtungen (13, 15) zur Übertragung der gemessenen Intensitäten ($I_0$, $I_1$) mit der Auswerteeinheit (18) verbunden sind, und
   - die Auswerteeinheit (18) derart ausgebildet ist, dass mindestens ein Streustrahlungskorrekturfaktor (F) in Abhängigkeit der gemessenen Intensitäten ($I_0$, $I_1$) berechnet wird.

2. Röntgencomputertomograph nach Anspruch 1, **dadurch gekennzeichnet, dass** ein als kürzeste Axial-Entfernung der ersten Intensitätsmesseinrichtung (13) zu der Röntgenquelle (3) definierter erster Abstand ($A_1$) im Verhältnis zu einem als kürzeste Axial-Entfernung der ersten Intensitätsmesseinrichtung (13) zu dem Objektträger (5) definierten zweiten Abstand ($A_2$) kleiner als 1/2, insbesondere kleiner als 1/4, und insbesondere kleiner als 1/8 ist.

3. Röntgencomputertomograph nach Anspruch 1 oder 2, **dadurch gekennzeichnet, dass** die erste Intensitätsmesseinrichtung (13) außerhalb eines Bestrahlungsbereiches (9) des Objektes (2) angeordnet ist.

4. Röntgencomputertomograph nach einem der Ansprüche 1 bis 3, **dadurch gekennzeichnet, dass** ein als kürzeste Axial-Entfernung der zweiten Intensitätsmesseinrichtung (15) zu dem Röntgendetektor (4) definierter dritter Abstand ($A_3$) im Verhältnis zu einem als kürzeste Axial-Entfernung der zweiten Intensitätsmesseinrichtung (15) zu dem Objektträger (5) definierten vierten Abstand ($A_4$) kleiner als 1/2, insbesondere kleiner als 1/4, und insbesondere kleiner als 1/8 ist.

5. Röntgencomputertomograph nach einem der Ansprüche 1 bis 4, **dadurch gekennzeichnet, dass** die Intensitätsmesseinrichtungen (13, 15) als elektronische Dosimeter ausgebildet sind.

6. Röntgencomputertomograph nach einem der Ansprüche 1 bis 5, **dadurch gekennzeichnet, dass** die Intensitätsmesseinrichtungen (13, 15) baugleich sind.

7. Röntgencomputertomograph nach einem der Ansprüche 1 bis 6, **dadurch gekennzeichnet, dass** die erste Intensitätsmesseinrichtung (13) derart angeordnet ist, dass als erste Intensität ($I_0$) die Intensität der ungeschwächten primären Röntgenstrahlung (6a) messbar ist und die zweite Intensitätsmesseinrichtung (15) derart angeordnet ist, dass als zweite Intensität ($I_1$) eine Intensität messbar ist, die sich aus der Intensität der ungeschwächten primären Röntgenstrahlung (6a) und der Intensität der sekundären Röntgenstrahlung (6c) zusammensetzt.

8. Röntgencomputertomograph nach einem der Ansprüche 1 bis 7, **dadurch gekennzeichnet, dass** die Intensitätsmesseinrichtungen (13, 15) in einem Messbereich (11) angeordnet sind, in dem die primäre ungeschwächte Röntgenstrahlung (6a) von der Röntgenquelle (3) zu dem Röntgendetektor (4) gelangt, ohne auf das zu untersuchende Objekt (2) zu treffen.

9. Röntgencomputertomograph nach einem der Ansprüche 1 bis 8, **dadurch gekennzeichnet, dass** die Auswerteeinheit (18) derart ausgebildet ist, dass für jedes Pixel P(x,y) des Röntgendetektors (4) ein korrigierter Schwächungswert nach der Gleichung

$$A(x,y) = -\ln\left[\ \frac{g(x,y)}{k \cdot I_0} + 1 - F\ \right]$$

berechnet wird wobei

A(x,y) der korrigierte Schwächungswert für das Pixel P(x,y),
g(x,y) ein gemessener Grauwert für das Pixel P(x,y),
$k \cdot I_0$ eine in Vorversuchen ermittelbare Konstante und
F der Streustrahlungskorrekturfaktor ist.

10. Verfahren zur Untersuchung eines Objektes mittels Röntgencomputertomographie, umfassend die Schritte:

- Positionieren eines zu untersuchenden Objektes (2) zwischen einer Röntgenquelle (3) und einem Röntgendetektor (4),
- Bestrahlen des Objektes (2) mit Röntgenstrahlung (6),
- Detektieren der Röntgenstrahlung (6), und
- Auswerten der detektierten Röntgenstrahlung (6) mittels einer Auswerteeinheit (18),

**dadurch gekennzeichnet, dass**

- während des Bestrahlens des Objektes (2) eine erste Intensität ($I_0$) der Röntgenstrahlung (6) zwischen der Röntgenquelle (3) und dem Objekt (2) gemessen wird,
- während des Bestrahlens des Objektes (2) eine zweite Intensität ($I_1$) der Röntgenstrahlung (6) zwischen dem Objekt (2) und dem Röntgendetektor (4) außerhalb eines Projektionsbereiches (10) des Objektes (2) gemessen wird, sowie
- während des Auswertens mindestens ein Streustrahlungskorrekturfaktor (F) in Abhängigkeit der gemessenen

Intensitäten ($I_0$, $I_1$) berechnet und die detektierte Röntgenstrahlung (6) mit dem mindestens einen Streustrahlungskorrekturfaktor (F) korrigiert wird.

**11.** Verfahren nach Anspruch 10, **dadurch gekennzeichnet, dass** die Intensitäten ($I_0$, $I_1$) zeitgleich gemessen werden.

**12.** Verfahren nach Anspruch 10 oder 11, **dadurch gekennzeichnet, dass** die erste Intensität ($I_0$) außerhalb eines Bestrahlungsbereiches (9) des Objektes (2) gemessen wird.

**13.** Verfahren nach einem der Ansprüche 10 bis 12, **dadurch gekennzeichnet, dass** in der Auswerteeinheit (18) mindestens eine Monte-Carlo-Streustrahlungsverteilung (M) des Objektes (2) gespeichert ist, in Abhängigkeit der der mindestens eine Streustrahlungskorrekturfaktor (F) berechnet wird.

**14.** Verfahren nach einem der Ansprüche 10 bis 13, **dadurch gekennzeichnet, dass** das Objekt (2) aus mehreren Projektionsrichtungen ($\varphi$) bestrahlt wird und für jede Projektionsrichtung ($\varphi$) mindestens ein Streustrahlungskorrektur (F) berechnet wird.

**15.** Verfahren nach einem der Ansprüche 10 bis 14, **dadurch gekennzeichnet, dass** als erste Intensität ($I_0$) die Intensität der ungeschwächten primären Röntgenstrahlung (6a) gemessen wird und als zweite Intensität ($I_1$) eine Intensität gemessen wird, die sich aus der Intensität der ungeschwächten primären Röntgenstrahlung (6a) und der Intensität der sekundären Röntgenstrahlung (6c) zusammensetzt.

**Claims**

**1.** X-ray computer tomograph for investigating an object by means of X-ray computer tomography comprising

- an X-ray source (3) for generating X-ray radiation (6),
- an X-ray detector (4) for detecting the X-ray radiation (6),
- an object carrier (5) for positioning an object (2) to be investigated between the X-ray source (3) and the X-ray detector (4), and
- an evaluation unit (18) for evaluating the detected X-ray radiation (6),

**characterised in that**

- a first intensity measurement device (13) for measuring a first intensity ($I_0$) of the X-ray radiation (6) is arranged between the X-ray source (3) and the object carrier (5),
- a second intensity measurement device (15) for measuring a second intensity ($I_1$) of the X-ray radiation (6) is arranged between the object carrier (5) and the X-ray detector (4) outside a projection region (10) of the object (2),
- the intensity measurement devices (13, 15) are connected to the evaluation unit (18) to transmit the measured intensities ($I_0$, $I_1$), and
- the evaluation unit (18) is configured in such a way that at least one scattered radiation correction factor (F) is calculated depending on the measured intensities ($I_0$, $I_1$).

**2.** X-ray computer tomograph according to claim 1, **characterised in that** a first spacing ($A_1$) defined as the shortest axial distance of the first intensity measurement device (13) from the X-ray source (3) in relation to a second spacing ($A_2$) defined as the shortest axial distance of the first intensity measurement device (13) from the object carrier (5) is smaller than 1/2, in particular smaller than 1/4 and, in particular, smaller than 1/8.

**3.** X-ray computer tomograph according to claim 1 or 2, **characterised in that** the first intensity measurement device (13) is arranged outside an irradiation region (9) of the object (2).

**4.** X-ray computer tomograph according to any one of claims 1 to 3, **characterised in that** a third spacing ($A_3$) defined as the shortest axial distance of the second intensity device (15) from the X-ray detector (4) in relation to a fourth spacing ($A_4$) defined as the shortest axial distance of the second intensity measurement device (15) from the object carrier (5) is smaller than 1/2, in particular smaller than 1/4 and, in particular, smaller than 1/8.

**5.** X-ray computer tomograph according to any one of claims 1 to 4, **characterised in that** the intensity measurement devices (13, 15) are configured as electronic dosimeters.

6.  X-ray computer tomograph according to any one of claims 1 to 5, **characterised in that** the intensity measurement devices (13, 15) are constructed identically.

7.  X-ray computer tomograph according to any one of claims 1 to 6, **characterised in that** the first intensity measurement device (13) is arranged in such a way that the intensity of the unattenuated primary X-ray radiation (6a) is measurable as the first intensity ($I_0$) and the second intensity measurement device (15) is arranged in such a way that an intensity, which is composed of the intensity of the unattenuated primary X-ray radiation (6a) and the intensity of the secondary X-ray radiation (6c), is measurable as the second intensity ($I_1$).

8.  X-ray computer tomograph according to any one of claims 1 to 7, **characterised in that** the intensity measurement devices (13, 15) are arranged in a measurement region (11), in which the primary unattenuated X-ray radiation (6a) arrives from the X-ray source (3) at the X-ray detector (4), without impinging on the object (2) to be investigated.

9.  X-ray computer tomograph according to any one of claims 1 to 8, **characterised in that** the evaluation unit (18) is configured in such a way that, for each pixel P(x,y) of the X-ray detector (4), a corrected attenuation value is calculated according to the equation

$$A(x,y) = -\ln\left[\ \frac{g(x,y)}{k \cdot I_0} + 1 - F\ \right]$$

wherein

A(x,y) is the corrected attenuation value for the pixel P(x,y),
g(x,y) is a measured grey-scale value for the pixel P(x,y),
$k \cdot I_0$ is a constant which is determinable in preliminary tests and
F is the scattered radiation correction factor.

10. Method for investigating an object by means of X-ray computer tomography, comprising the steps:

    - positioning an object (2) to be investigated between an X-ray source (3) and an X-ray detector (4),
    - irradiating the object (2) with X-ray radiation (6),
    - detecting the X-ray radiation (6), and
    - evaluating the detected X-ray radiation (6) by means of an evaluation unit (18),

    **characterised in that**

    - during the irradiation of the object (2), a first intensity ($I_0$) of the X-ray radiation (6) between the X-ray source (3) and the object (2) is measured,
    - during the irradiation of the object (2), a second intensity ($I_1$) of the X-ray radiation (6) between the object (2) and the X-ray detector (4) outside a projection region (10) of the object (2) is measured, and
    - during the evaluation, at least one scattered radiation correction factor (F) is calculated depending on the measured intensities ($I_0$, $I_1$) and the detected X-ray radiation (6) is corrected with the at least one scattered radiation correction factor (F).

11. Method according to claim 10, **characterised in that** the intensities ($I_0$, $I_1$) are measured at the same time.

12. Method according to claim 10 or 11, **characterised in that** the first intensity ($I_0$) is measured outside an irradiation region (9) of the object (2).

13. Method according to any one of claims 10 to 12, **characterised in that** at least one Monte Carlo scattered radiation distribution (M) of the object (2) is stored in the evaluation unit (18), depending on which the at least one scattered radiation correction factor (F) is calculated.

14. Method according to any one of claims 10 to 13, **characterised in that** the object (2) is irradiated from a plurality of projection directions ($\varphi$) and at least one scattered radiation correction factor (F) is calculated for each projection

direction ($\varphi$).

**15.** Method according to any one of claims 10 to 14, **characterised in that** the intensity of the unattenuated primary X-ray radiation (6a) is measured as the first intensity ($I_0$) and an intensity, which is composed of the intensity of the unattenuated primary X-ray radiation (6a) and the intensity of the secondary X-ray radiation (6c), is measured as the second intensity ($I_1$).

**Revendications**

**1.** Tomodensitomètre à rayons X pour l'examen d'un objet au moyen de la tomodensitométrie à rayons X comprenant

- une source de rayons X (3) pour la génération d'un rayonnement X (6),
- un détecteur de rayons X (4) pour la détection du rayonnement X (6),
- un support d'objet (5) pour le positionnement d'un objet (2) à analyser entre la source de rayons X (3) et le détecteur de rayons X (4), et
- une unité de traitement (18) pour l'exploitation du rayonnement X détecté (6),

**caractérisé en ce**

- **qu'**un premier dispositif de mesure d'intensité (13) pour la mesure d'une première intensité ($I_0$) du rayonnement X (6) est disposé entre la source de rayons X (3) et le support d'objet (5),
- **qu'**un deuxième dispositif de mesure d'intensité (15) pour la mesure d'une deuxième intensité ($I_1$) du rayonnement X (6) est disposé entre le support d'objet (5) et le détecteur de rayons X (4), en dehors d'un domaine de projection (10) de l'objet (2),
- **que** les dispositifs de mesure d'intensités (13, 15) sont reliés avec l'unité d'exploitation (18) pour la transmission des intensités mesurées ($I_0$, $I_1$, et
- **que** l'unité de traitement (18) est ainsi conçue qu'au moins un facteur de correction du rayonnement dispersé (F) est calculé en fonction des intensités mesurées ($I_0$, $I_1$).

**2.** Tomodensitomètre à rayons X selon la revendication 1 **caractérisé en ce que** le rapport d'une première distance ($A_1$), définie comme l'éloignement axial le plus faible du dispositif de mesure d'intensité (13) par rapport à la source de rayons X (3), sur une deuxième distance ($A_2$), définie comme l'éloignement axial le plus faible du premier dispositif de mesure d'intensité (13) par rapport au support d'objet (5), est inférieur à 1/2, en particulier est inférieur à 1/4, et en particulier est inférieur à 1/8.

**3.** Tomodensitomètre à rayons X selon les revendications 1 ou 2 **caractérisé en ce que** le premier dispositif de mesure d'intensité (13) est disposé en dehors d'un domaine d'illumination de l'objet (2).

**4.** Tomodensitomètre à rayons X selon l'une des revendications de 1 à 3 **caractérisé en ce que** le rapport d'une troisième distance ($A_3$), définie comme l'éloignement axial le plus faible du deuxième dispositif de mesure d'intensité (15) par rapport au détecteur de rayons X (4), sur une quatrième distance ($A_4$), définie comme l'éloignement axial le plus faible du deuxième dispositif de mesure d'intensité (15) par rapport au support d'objet (5), est inférieur à 1/2, en particulier est inférieur à 1/4, et en particulier inférieur à 1/8.

**5.** Tomodensitomètre à rayons X selon l'une des revendications de 1 à 4, **caractérisé en ce que** les dispositifs de mesure des intensités (13, 15) sont conçus sous la forme de dosimètres électroniques.

**6.** Tomodensitomètre selon l'une des revendications de 1 à 5 **caractérisé en ce que** les dispositifs de mesure des intensités (13, 15) sont de construction semblable.

**7.** Tomodensitomètre selon l'une des revendications de 1 à 6 **caractérisé en ce que** le premier dispositif de mesure d'intensité (13) est disposé de telle sorte que l'intensité du rayonnement X primaire non amorti peut être mesurée comme la première intensité ($I_0$) et que le deuxième dispositif de mesure d'intensité (15) est disposé de telle sorte qu'en tant que deuxième intensité ($I_1$) une intensité, qui est le résultat de la somme de l'intensité du rayonnement X primaire non amorti (6a) et de l'intensité du rayonnement X secondaire (6c), est mesurable.

**8.** Tomodensitomètre selon l'une des revendications de 1 à 7 **caractérisé en ce que** les dispositifs de mesure d'intensités (13, 15) sont disposés dans un domaine de mesure (11) dans lequel le rayonnement X primaire non amorti (6a) arrive de la source de rayons X (3) sur le détecteur de rayons X (4) sans se disperser sur l'objet (2) à analyser.

9. Tomodensitomètre selon l'une des revendications de 1 à 8 **caractérisé en ce que** l'unité d'exploitation (18) est conçue de telle manière que, pour chaque pixel P(x,y) du détecteur de rayons X (4), une valeur d'atténuation corrigée est calculée selon la relation

$$A(x,y) = \ln\left[\frac{g(x,y)}{k - I_0} + 1 - F\right]$$

où

A(x,y) est la valeur d'atténuation corrigée pour le pixel P(x,y),
g(x,y) est un niveau de gris mesuré pour le pixel P(x,y),
$k - I_0$ est une constante déterminée par un essai préalable, et
F est le facteur de correction du rayonnement dispersé.

10. Procédé d'analyse d'un objet par tomodensitométrie à rayons X comprenant les étapes de :

- positionnement d'un objet (2) à analyser entre une source de rayons X (3) et un détecteur de rayons X (4),
- illumination de l'objet (2) par le rayonnement X (6),
- détection du rayonnement X (6), et
- exploitation du rayonnement X (6) détecté au moyen d'une unité de traitement (18),

**caractérisé en ce que**

- pendant l'illumination de l'objet (2), une première intensité ($I_0$) du rayonnement X (6) est mesurée entre la source de rayons X (3) et l'objet (2),
- pendant l'illumination de l'objet (2), une deuxième intensité ($I_1$) du rayonnement X (6) est mesurée entre l'objet (2) et le détecteur de rayons X (4) en dehors du domaine de projection (10) de l'objet (2), ainsi que
- pendant l'exploitation, au moins un facteur de correction du rayonnement dispersé (F) est calculé en fonction des intensités mesurées ($I_0$, $I_1$) et que le rayonnement X (6) détecté est corrigé à l'aide d'au moins un facteur de correction de rayonnement dispersé (F).

11. Procédé selon la revendication 10 **caractérisé en ce que** les intensités ($I_0$, $I_1$) sont mesurées simultanément.

12. Procédé selon les revendications 10 ou 11 **caractérisé en ce que** la première intensité ($I_0$) est mesurée en dehors du domaine d'illumination (9) de l'objet (2).

13. Procédé selon l'une des revendications de 10 à 12 **caractérisé en ce qu'**au moins une distribution de Monte Carlo du rayonnement dispersé (M) de l'objet (2) est enregistrée dans l'unité de traitement (18), en fonction de laquelle au moins le facteur de correction du rayonnement dispersé (F) est calculé.

14. Procédé selon l'une des revendications de 10 à 13 **caractérisé en ce que** l'objet (2) est illuminé à partir de plusieurs directions de projection ($\varphi$) et qu'un facteur de correction du rayonnement dispersé (F) est calculé pour chaque direction de projection ($\varphi$).

15. Procédé selon l'une des revendications de 10 à 14 **caractérisé en ce que** l'intensité du rayonnement X primaire non amorti (6a) est mesurée en tant que première intensité ($I_0$) et qu'en tant que deuxième intensité ($I_1$), une intensité, qui se compose de l'intensité du rayonnement X primaire non amorti (6a) et de l'intensité du rayonnement X secondaire (6c), est mesurée.

Fig. 1

Fig. 2

φ

3  6a  7  6  12  8  9  1  20  16  2  11  4

6c
6b
10
6c

14

15

17

17  6  13  11  17

18

x
y  z

A₁  A₂  A₄  A₃

EP 2 247 946 B1

14

g(x,y = const.)

$I$

$I_S$

$I_0$

$I(x,y = const.)$

x

**Fig. 3**

g(x,y = const.)

$I$    M

$I_S(x,y = const.)$

$I_0$

$I(x,y = const.)$

1

0,5

x

$M(x,y = const.)$

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6687326 B1